# EUROPÄISCHE PATENTANMELDUNG

(11) **EP 1 419 915 A1**
(43) Veröffentlichungstag der Anmeldung: **19.05.2004**
(21) Anmeldenummer: 03022025.5
(22) Anmeldetag: 01.10.2003
(51) Int. Cl.: B60J 5/04, B60J 5/10

(54) **Verfahren zur Herstellung eines Aussentürelementes**

(30) Priorität: 13.11.2002 DE 10253119
(71) Anmelder: HAPPICH Fahrzeug- und Industrieteile GmbH, 42285 Wuppertal (DE)
(72) Erfinder: Gebhard, Karsten, 42653 Solingen (DE)

(57) **Zusammenfassung**

Die Erfindung bezieht sich auf ein Verfahren zur Herstellung eines Außentürelementes 10 für Fahrzeuge oder Fahrzeuganhänger mit Sonderaufbauten wie z. B. Wohnmobile, Wohnwagen, Krankenwagen, Transportfahrzeuge oder dgl. mit einem an einem Türrahmen schwenkbar angeordneten Türblatt 11 mit einer im Wesentlichen eine ebene Fläche aufweisenden Außenverkleidung 12. Es wird dabei erfindungsgemäß das gesamte Türblatt 11 des Außentürelementes 10 bzw. die Außenverkleidung 12 des Türblattes 11 des Außentürelementes 10 im Wesentlichen in einem Verformungsvorgang, insbesondere im Tiefziehvorgang erzeugt. Die Erfindung bezieht sich weiterhin auf ein Außentürelement 10 für Fahrzeuge oder Fahrzeuganhänger mit Sonderaufbauten wie z. B. Wohnmobile, Wohnwagen, Krankenwagen, Transportfahrzeuge oder dgl., mit einem an einem Türrahmen schwenkbar angeordneten Türblatt 11 mit einer im Wesentlichen eine ebene Fläche aufweisenden Außenverkleidung 12. Es ist dabei erfindungsgemäß das gesamte Türblatt 11 des Außentürelementes 10 bzw. die Außenverkleidung 12 des Türblattes 11 des Außentürelementes 10 als verformungsfähiges, insbesondere tiefziehfähiges Bauteil ausgebildet.

## Beschreibung

Die Erfindung bezieht sich auf ein Verfahren zur Herstellung eines Außentürelementes für Fahrzeuge oder Fahrzeuganhänger mit Sonderaufbauten wie z. B. Wohnmobile, Wohnwagen, Krankenwagen, Transportfahrzeuge oder dgl., mit einem an einem Türrahmen schwenkbar angeordneten Türblatt mit einer im Wesentlichen eine ebene Fläche aufweisenden Außenverkleidung. Die Erfindung bezieht sich weiterhin auf ein Außentürelement, für Fahrzeuge oder Fahrzeuganhänger mit Sonderaufbauten, wie z. B. Wohnmobile, Wohnwagen, Krankenwagen, Transportfahrzeuge oder dgl. mit einem an einem Türrahmen schwenkbar angeordneten Türblatt mit einer im Wesentlichen eine ebene Fläche aufweisenden Außenverkleidung.

Es sind aus der Praxis verschiedene derartige Verfahren zur Herstellung eines Außentürelementes für Fahrzeuge oder Fahrzeuganhänger bzw. entsprechend hergestellte Außentürelemente bekannt. Es lassen sich dabei die bekannten Verfahren bzw. die bekannten Außentürelemente in zwei unterschiedliche Gruppen aufteilen:

Bei der ersten Gruppe z. B. von Wohnmobiltüren und -klappen wird in der Regel eine Aluminiumrahmen-Konstruktion als Grundelement verwenden, in die ein Sandwich eingelegt wird, welches z. B. Bestandteile aus Blech, Holz, und/oder glasfaserverstärktem Kunststoff enthalten kann. Es weisen derartige Außentürelemente zwar ein relativ geringes Gewicht auf, nachteilig ist jedoch zum einen, das diese Außentürelemente ein optisch unschönes Erscheinungsbild aufweisen, zum anderen ist nachteilig, dass sich diese Außentürelemente nicht in andere Konturen verformen lassen.

Bei der zweiten Gruppe von Außentürelementen werden die Wohnmobiltüren und -klappen aus z. B. an einem Trägergerippe angebrachten Formen aus glasfaserverstärktem Kunststoff hergestellt. Derartige Außentürelemente haben an sich den Vorteil, dass sie ein besseres optisches Erscheinungsbild aufweisen und dass diese bekannten Außentürelemente auch in andere Konturen dreidimensional verformbar sind. Nachteilig ist bei dieser Form von Außentürelementen zum einen, dass die Werkzeugkosten für die Herstellung derartiger Außentürelemente sehr hoch sind, weiterhin nachteilig ist das sehr hohe Gewicht derartiger Außentürelemente. Letzteres ist nicht nur in energietechnischer Hinsicht nachteilig, sondern auch in Bezug auf die neuen Führerscheinvorschriften mit einer deutlichen Herabsetzung der Obergrenze des zulässigen Gesamtgewichtes für den Führerschein der Klasse Drei.

Ausgehend von den bekannten Verfahren bzw. den bekannten Außentürelementen liegt der Erfindung die Aufgabe zugrunde, die bekannten Verfahren bzw. Anordnungen unter Beibehaltung der bisherigen Vorteile in der Weise zu verbessern bzw. weiterzuentwickeln, dass kostengünstig Außentürelemente für Fahrzeuge der hier in Rede stehenden Art freiformbar bei einem geringen Teilegewicht hergestellt werden können. Das gewünschte Verfahren bzw. die gewünschte Anordnung soll dabei nicht nur kostengünstig, sondern auch einfach durchführbar bzw. herstellbar sein, im Weiteren soll das gewünschte Außentürelement hinsichtlich seiner sonstigen Funktionseigenschaften weiterhin den bestehenden Anforderungen genügen und ein ansprechendes optisches Erscheinungsbild bieten.

Die Aufgabe wird bezüglich des Verfahrens erfindungsgemäß einerseits dadurch gelöst, dass das gesamte Türblatt des Außentürelementes im Wesentlichen in einem Verformungsvorgang, insbesondere Tiefziehvorgang erzeugt wird, andererseits wird bei einer alternativen Ausführungsform des erfindungsgemäßen Verfahrens die Aufgabe dadurch gelöst, dass die Außenverkleidung des Türblattes des Außentürelementes im Wesentlichen in einem Verformungsvorgang, insbesondere Tiefziehvorgang erzeugt wird.

Die Aufgabe wird bezüglich der Vorrichtung erfindungsgemäß einerseits dadurch gelöst, dass das gesamte Türblatt des Außentürelementes als verformungsfähiges, insbesondere tiefziehfähiges Bauteil ausgebildet ist, andererseits wird bei einer alternativen Ausführungsform des erfindungsgemäßen Außentürelementes die Aufgabe dadurch gelöst, dass die Außenverkleidung des Türblattes des Außentürelementes als verformungsfähiges, insbesondere tiefziehfähiges Bauteil ausgebildet ist.

Mit dem erfindungsgemäßen Verfahren bzw. dem erfindungsgemäßen Außentürelement wird erstmalig mit einfachen Mitteln die Möglichkeit geschaffen, kostengünstig Außentürelemente für Fahrzeuge der hier in Rede stehenden Art, z. B. Wohnmobile, dreidimensional freiverformbar bei einem geringen Teilegewicht herzustellen. Es wird hierzu die gewünschte Kontur des Außentürelementes z. B. aus einem Thermoplast beispielsweise in einem Tiefziehvorgang erzeugt. Das derart erzeugte Außentürelement kann dabei sowohl als selbsttragendes Türelement als auch als Außenverkleidungselement einer Rahmenkonstruktion ausgeführt werden. Das erfindungsgemäße Verfahren bzw. das erfindungsgemäße Außentürelement nutzt also die Vorteile einer freiverformbaren Geometrie des verformungsfähigen, insbesondere tiefziehfähigen Bauteiles bei gleichzeitiger Erreichung eines geringen Gewichtes. Das erfindungsgemäße Außentürelement bietet außerdem insbesondere hinsichtlich seiner Oberfläche ein hochwertiges Erscheinungsbild und ist einfach und kostengünstig herstellbar. Dabei lassen sich insbesondere günstige Werkzeuge verwenden, so dass die Bauteilekosten insgesamt niedrig sind. Auch in seinen übrigen Funktionseigenschaften entspricht das erfindungsgemäße Außentürelement im Wesentlichen den bereits bekannten Systemen.

Bei der bevorzugten Ausführungsform des erfindungsgemäßen Verfahrens wird das gesamte Türblatt des Außentürelementes bzw. die Außenverkleidung des Türblattes des Außentürelementes im Wesentlichen aus einem thermoplastisch verformten Kunststoff in einem Verformungsvorgang, insbesondere Tiefziehvorgang erzeugt. Diese Art der Herstellung ist besonders einfach und kostengünstig und führt zu einem funktionsgerechten Außentürelement mit einem geringen Gewicht.

Entsprechend ist in der bevorzugten Ausführungsform des erfindungsgemäßen Außentürelementes das als verformungsfähiges, insbesondere tiefziehfähiges Bauteil ausgebildete Türblatt des Außentürelements bzw. die Außenverkleidung des Türblattes des Außentürelementes aus einem thermoplastisch verformten Kunststoff gebildet. Es ergeben sich dabei die entsprechenden Vorteile wie zuvor angegeben.

Nach einem weiteren Ausgestaltungsmerkmal der vorliegenden Erfindung ist das Außentürelement durch ein Klappentürelement gebildet. Zweckmäßig ist dabei dass als Klappentürelement ausgebildete Außentürelement als Stauraum- und/oder Wartungsraumklappe ausgebildet. Das erfindungsgemäße Außentürelement bezieht sich also nicht nur auf Türelemente an sich, sondern auch auf Klappentürelemente wie z. B. Stauraum- und/oder Wartungsraumklappen.

Nach einem weiteren Ausgestaltungsmerkmal des erfindungsgemäßen Verfahrens wird ein als Klappentürelement ausgebildetes Außentürelement im Wesentlichen in einem Verformungsvorgang, insbesondere Tiefziehvorgang erzeugt. Es wird dabei zweckmäßig ein als Stauraum- und/oder Wartungsraumklappe ausgebildetes Klappentürelement im Wesentlichen in einem Verformungsvorgang, insbesondere Tiefziehvorgang erzeugt. Mit dem erfindungsgemäßen Verfahren lassen sich also nicht nur Türelemente an sich, sondern auch Klappentürelemente wie z. B. Stauraum- und/oder Wartungsraumklappen erzeugen.

Die Erfindung ist in der einzigen Figur der Zeichnung in einem Ausführungsbeispiel dargestellt. Es zeigt:

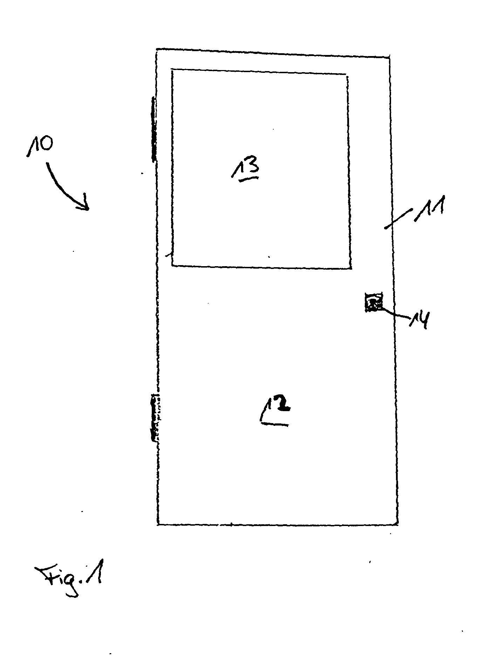

- Fig. 1: eine schematische Vorderansicht eines nach dem erfindungsgemäßen Verfahren hergestellten Türblattes eines erfindungsgemäßen Außentürelementes.

Das nach dem erfindungsgemäßen Verfahren hergestellte erfindungsgemäße Außentürelement ist generell mit 10 bezeichnet. Es dient das erfindungsgemäße Verfahren zur Herstellung eines Außentürelementes 10 für Fahrzeuge oder Fahrzeuganhänger mit Sonderaufbauten wie z. B. Wohnmobile, Wohnwagen, Krankenwagen, Transportfahrzeuge oder dgl. mit einem an einem in der Fig. der Zeichnung nicht dargestellten Türrahmen schwenkbar angeordneten, mit 11 bezeichneten Türblatt. Es ist dazu in der Fig. 1 der Zeichnung ein Türblatt 11 eines nach dem erfindungsgemäßen Verfahren hergestellten erfindungsgemäßen Außentürelementes 10 gezeigt. Dieses Türblatt 11 umfasst u. a. eine im Wesentlichen eine ebene Fläche aufweisende mit 12 bezeichnete Außenverkleidung. Bei dem in der Fig. 1 der Zeichnung dargestellten Türblatt 11 ist außerdem schematisch eine mit 13 bezeichnete Fensteröffnung und ein mit 14 bezeichneter Türgriff dargestellt.

Das erfindungsgemäße Verfahren sieht einerseits vor, dass das gesamte Türblatt 11 des Außentürelementes 10 im Wesentlichen in einem Verformungsvorgang, insbesondere Tiefziehvorgang erzeugt wird, andererseits sieht das erfindungsgemäße Verfahren vor, dass die Außenverkleidung 12 des Türblattes 11 des Außentürelementes 10 im Wesentlichen in einem Verformungsvorgang, insbesondere Tiefziehvorgang erzeugt wird. Entsprechend ist bei dem erfindungsgemäßen Außentürelement 10 gemäß der Fig. 1 entweder das gesamte Türblatt 11 des Außentürelementes 10 als verformungsfähiges, insbesondere tiefziehfähiges Bauteile ausgebildet, oder nur die Außenverkleidung 12 des Türblattes 11 des Außentürelementes 10 ist als verformungsfähiges, insbesondere als tiefziehfähiges Bauteil ausgebildet. Im erstgenannten Falle ist das erfindungsgemäße Außentürelement 10 als selbsttragendes Element ausgebildet, im letztgenannten Falle umfasst das erfindungsgemäße Außentürelement 10 die Außenverkleidung 12 mit einer in der Fig. der Zeichnung nicht dargestellten Rahmenkonstruktion.

Gemäß einer Ausführungsform des erfindungsgemäßen Verfahrens ist vorgesehen, dass das gesamte Türblatt 11 des Außentürelementes 10 bzw. die Außenverkleidung 12 des Türblattes 11 des Außentürelementes 10 im Wesentlichen aus einem thermoplastisch verformten Kunststoff in einem Verformungsvorgang, insbesondere Tiefziehvorgang erzeugt wird. Dem gemäß kann das als verformungsfähiges, insbesondere tiefziehfähiges Bauteil ausgebildete Türblatt 11 des erfindungsgemäßen Außentürelementes 10 bzw. die Außenverkleidung 12 des Türblattes 11 des erfindungsgemäßen Außentürelementes 10 aus einem thermoplastisch verformten Kunststoff gebildet sein.

Das erfindungsgemäße Außentürelement 10 ist nicht nur für Türelemente an sich vorgesehen, sondern das Außentürelement 10 kann z. B. auch durch ein Klappentürelement gebildet sein, wobei das als Klappentürelement ausgebildete Außentürelement 10 beispielsweise als Stauraumund/oder Wartungsraumklappe ausgebildet sein kann. In diesem Falle wird gemäß dem erfindungsgemäßen Verfahren ein als Klappentürelement ausgebildetes Außentürelement 10 im Wesentlichen in einem Verformungsvorgang, insbesondere Tiefziehvorgang erzeugt. Dabei empfiehlt es sich in einer Ausführungsform, dass ein als Stauraum- und/oder Wartungsraumklappe ausgebildetes Klappentürelement im Wesentlichen in einem Verformungsvorgang, insbesondere Tiefziehvorgang erzeugt wird.

Mit dem erfindungsgemäßen Verfahren bzw. dem erfindungsgemäßen Außentürelement wird erstmalig mit einfachen Mitteln die Möglichkeit geschaffen, kostengünstig Außentürelemente 10 für Fahrzeuge der in Rede stehenden Art, z. B. Wohnmobile, dreidimensional frei verformbar mit einem geringen Teilegewicht herzustellen. Die gewünschte Kontur des Außentürelementes 10 kann dabei aus einem Thermoplast beispielsweise durch Tiefziehen erzeugt werden, wobei das derart erzeugte Außentürelement 10 bei einer Ausführungsform als selbsttragendes Element und bei einer anderen Ausführungsform als Außenverkleidung 12 einer Rahmenkonstruktion ausgeführt werden kann. Das erfindungsgemäße Verfahren bzw. das erfindungsgemäße Außentürelement nutzt die Vorteile einer dreidimensional freiverformbaren Geometrie bei gleichzeitiger Erzielung eines geringen Teilegewichtes. Gleichzeitig wird insbesondere hinsichtlich der Oberfläche ein hochwertiges äußeres Erscheinungsbild erzielt. Das erfindungsgemäße Außentürelement 10 ist außerdem einfach und kostengünstig herstellbar, es können deshalb günstige Werkzeuge verwendet werden, so dass die Bauteilekosten insgesamt niedrig sind. Das erfindungsgemäße Außentürelement 10 entspricht auch in seinen übrigen Funktionseigenschaften im Wesentlichen den bereits bekannten Systemen.

Wie bereits erwähnt sind die dargestellten Ausführungsformen nur beispielsweise Verwirklichungen der Erfindung, diese ist nicht darauf beschränkt, es sind vielmehr noch mancherlei Abänderungen und Ausbildungen möglich. So lassen sind mit dem erfindungsgemäßen Verfahren insbesondere von dem in der Fig. der Zeichnung dargestellten Ausführungsbeispiel abweichende Außentürelemente 10 erzeugen.

### Bezugszeichenliste:

- 10: Außentürelement
- 11: Türblatt
- 1 2: Außenverkleidung (von 11)
- 13: Fensteröffnung (von 11)
- 14: Türgriff

## Patentansprüche

1. Verfahren zur Herstellung eines Außentürelementes (10) für Fahrzeuge oder Fahrzeuganhänger mit Sonderaufbauten wie z. B. Wohnmobile, Wohnwagen, Krankenwagen, Transportfahrzeuge oder dgl., mit einem an einem Türrahmen schwenkbar angeordneten Türblatt (11) mit einer im Wesentlichen eine ebene Fläche aufweisenden Außenverkleidung (12),
**dadurch gekennzeichnet,**
**dass** das gesamte Türblatt (11) des Außentürelementes (10) im Wesentlichen in einem Verformungsvorgang, insbesondere Tiefziehvorgang erzeugt wird.

2. Verfahren zur Herstellung eines Außentürelementes (12) für Fahrzeuge oder Fahrzeuganhänger mit Sonderaufbauten wie z. B. Wohnmobile, Wohnwagen, Krankenwagen, Transportfahrzeuge oder dgl., mit einem an einem Türrahmen schwenkbar angeordneten Türblatt (11) mit einer im Wesentlichen eine ebene Fläche aufweisenden Außenverkleidung (12),
**dadurch gekennzeichnet,**
**dass** die Außenverkleidung (12) des Türblattes (11) des Außentürelementes (10) im Wesentlichen in einem Verformungsvorgang, insbesondere Tiefziehvorgang erzeugt wird.

3. Verfahren nach Anspruch 1 oder 2, **dadurch gekennzeichnet, dass** das gesamte Türblatt (11) des Außentürelementes (10) bzw. die Außenverkleidung (12) des Türblattes (11) des Außentürelementes (10) im Wesentlichen aus einem thermoplastisch verformten Kunststoff in einem Verformungsvorgang, insbesondere Tiefziehvorgang erzeugt wird.

4. Außentürelement (10) für Fahrzeuge oder Fahrzeuganhänger mit Sonderaufbauten, wie z. B. Wohnmobile, Wohnwagen, Krankenwagen, Transportfahrzeuge oder dgl. mit einem an einem Türrahmen schwenkbar angeordneten Türblatt (11) mit einer im Wesentlichen eine ebene Fläche aufweisenden Außenverkleidung (12),
**dadurch gekennzeichnet,**
**dass** das gesamte Türblatt (11) des Außentürelementes (10) als verformungsfähiges, insbesondere tiefziehfähiges Bauteil ausgebildet ist.

5. Außentürelement (10) für Fahrzeuge oder Fahrzeuganhänger mit Sonderaufbauten, wie z. B. Wohnmobile, Wohnwagen, Krankenwagen, Transportfahrzeuge oder dgl. mit einem an einem Türrahmen schwenkbar angeordneten Türblatt (11) mit einer im Wesentlichen eine ebene Fläche aufweisenden Außenverkleidung (12),
**dadurch gekennzeichnet,**
**dass** die Außenverkleidung (12) des Türblattes (11) des Außentürelementes (10) als verformungsfähiges, insbesondere tiefziehfähiges Bauteil ausgebildet ist.

6. Außentürelement nach Anspruch 4 oder 5, **dadurch gekennzeichnet, dass**, das als verformungsfähiges, insbesondere tiefziehfähiges Bauteil ausgebildetes Türblatt (11) des Außentürelementes (10) bzw. die Außenverkleidung (12) des Türblattes (11) des Außentürelementes (10) aus einem thermoplastisch verformten Kunststoff gebildet ist.

7. Außentürelement nach einem der Ansprüche 4 bis 6, **dadurch gekennzeichnet, dass** das Außentürelement (10) durch ein Klappentürelement gebildet ist.

8. Außentürelement nach Anspruch 7, **dadurch gekennzeichnet, dass** das als Klappentürelement ausgebildete Außentürelement (10) als Stauraum- und/oder Wartungsraumklappe ausgebildet ist.

9. Verfahren nach einem der Ansprüche 1 bis 3, **dadurch gekennzeichnet, dass** ein als Klappentürelement ausgebildetes Außentürelement (10) im Wesentlichen in einem Verformungsvorgang, insbesondere Tiefziehvorgang erzeugt wird.

10. Verfahren nach Anspruch 9, **dadurch gekennzeichnet, dass** ein als Stauraum- und/oder Wartungsraumklappe ausgebildetes Klappentürelement im Wesentlichen in einen Verformungsvorgang, insbesondere im Tiefziehvorgang erzeugt wird.
